# EUROPÄISCHE PATENTSCHRIFT

(11) **EP 1 814 715 B1**
(45) Veröffentlichungstag und Bekanntmachung des Hinweises auf die Patenterteilung: **09.04.2014**
(21) Anmeldenummer: 05825550.6
(22) Anmeldetag: 24.11.2005
(51) Int. Cl.: B29C 49/56, B29K 67/00, B29C 49/36

(54) **FORMBLASMASCHINE**
BLOW MOLDING MACHINE
MACHINE DE MOULAGE PAR SOUFFLAGE

(30) Priorität: 26.11.2004 DE 102004057102
(43) Veröffentlichungstag der Anmeldung: 08.08.2007
(73) Patentinhaber: Krones AG, 93073 Neutraubling (DE)
(72) Erfinder: STOIBER, Christian, 93185 Michelsneukirchen (DE); VOTH, Klaus, 93083 Obertraubling (DE)
(74) Vertreter: Bittner, Bernhard
(86) Internationale Anmeldenummer: PCT/EP2005/012565
(87) Internationale Veröffentlichungsnummer: WO 2006/056437

(56) Entgegenhaltungen:
- EP-A- 0 284 242
- DE-A1- 2 856 132
- DE-A1- 10 005 687
- DE-A1- 10 063 795
- DE-A1- 19 810 238
- DE-A1- 19 906 366
- DE-U1- 29 716 268
- GB-A- 1 171 890
- US-A- 2 901 769
- US-A- 3 415 915
- US-A- 3 624 672
- US-A- 3 969 059
- US-A- 4 313 720
- US-A- 4 565 516
- US-B1- 6 390 802
- PATENT ABSTRACTS OF JAPAN Bd. 010, Nr. 261 (M-514), 5. September 1986 (1986-09-05) -& JP 61 086235 A (KYORAKU CO LTD), 1. Mai 1986 (1986-05-01)

## Beschreibung

Die Erfindung betrifft eine Formblasmaschine, mit der mit einem Formblasverfahren formgeblasene Artikel hergestellt werden können.

Aus der EP 1 084 020 B1 ist eine Vorrichtung zum Herstellen von Behältern aus Kunststoffmaterial bekannt, bei dem zwei gegenüberliegende Teile einer Blasform zum Öffnen der Form gegeneinander verschwenkt werden und zwar so, dass ein äußerer Teil der Blasform nach unten um eine waagrecht liegende Schwenkachse weggeschwenkt wird. Diese Ausführungsform hat jedoch den Nachteil, dass zum Verschwenken des einen Blasformteils aus einer vertikalen in eine horizontale Position sehr viel Platz benötigt wird.

Aus der US 3,415,915 ist eine Maschine mit einem ähnlichen Aufbau mit den selben Nachteilen bekannt.

Aus der US 2,901,769 ist eine Vorrichtung zum Herstellen von Kunststoffartikeln bekannt, bei der zwei gegenüberliegende Blasformteile um eine gemeinsame Schwenkachse verschwenkt werden können, wobei zum Öffnen der Form beide Teile gegensinnig ausgeschwenkt werden.

Aus der DE 28 56 132 A1 ist eine OrientierungsblasVerformungs-Vorrichtung bekannt bei der auf einem Blasformhalter jeweils Blasformen montiert sind. Die Blasformen sind jeweils mit zwei Blasformhälften gebildet.

Nachteilig kann bei derartigen Vorrichtungen sein, dass durch die Bewegbarkeit der beiden Blasformteile Ungenauigkeiten bei den hergestellten Artikeln auftreten.

Aufgabe der vorliegenden Erfindung ist es daher, eine möglichst kompakte und präzise arbeitende Formblasmaschine zur Verfügung zu stellen.

Diese Aufgabe wird gelöst mit einer Formblasmaschine nach Anspruch 1.

Um eine möglichst einfache Mechanik zu erhalten und um möglichst präzise Artikel herstellen zu können, ist ein Blasformteil im Vergleich zu einer Position eines fertiggeblasenen Artikels in der Blasform feststehend.

Insbesondere kann die vorliegende Aufgabe erfindungsgemäß dadurch gelöst werden, dass die Übergabesterne so ausgebildet sind, dass sie eine Bewegung relativ zu der Blasform in tangentialer Richtung ermöglichen, und der Vorformling von in Umlaufrichtung des Blasformhalters gesehen hinten in die in Umlaufrichtung des Blasformhalters gesehen nach hinten geöffnete Blasform eingesetzt und der fertig geblasene Artikel entsprechend herausgenommen werden kann.

Die Position eines fertiggeblasenen Artikels in der Blasform wird beispielsweise durch einen Druckluftventilausgang, eine Reckstange, einen Halter oder Ähnliches vorgegeben, die bei dem Formblasvorgang eingesetzt werden.

Dadurch, dass dieses Blasformteil im Vergleich zur Position des fertiggeblasenen Artikels nicht bewegt wird, ergeben sich keinerlei Ungenauigkeiten durch die relative Beweglichkeit dieses Blasformteils. Durch die Bewegung des anderen Blasformteils in einer seitlichen Bewegung wird im Vergleich zu einer Bewegung nach unten deutlich weniger Platz benötigt. Die Bewegung kann eventuell auch eine Komponente nach unten oder oben enthalten, da auch bereits durch eine Bewegung mit möglich ist. Bevorzugt ist eine Bewegung nur in seitlicher Richtung.

Die zwei Blasformteile können gegenüberliegende Blasformteile sein, was bedeutet, dass sie bei geschlossener Blasform auf gegenüberliegenden Seiten der Position eines fertiggeblasenen Artikels sind.

Die Blasform ist insgesamt so angeordnet, dass ein Blasformteil weiter innen umläuft, als das andere Blasformteil. Da zum Öffnen der Blasform weiterhin etwas Platz benötigt wird, kann durch eine solche Anordnung erreicht werden, dass die Öffnung zumindest einen wesentlichen Anteil einer Bewegung in eine radiale Richtung enthält, sodass die Blasformen in tangentialer Richtung möglichst dicht nebeneinander angeordnet werden können. Für die Öffnung der Blasform wird so nur relativ wenig Platz zwischen eventuell vorhandenen mehreren Blasformen benötigt.

Das seitlich wegbewegbare Blasformteil ist schwenkbar an dem Blasformhalter gehalten und hat eine Schwenkachse, die senkrecht liegt. Dadurch ergibt sich eine Bewegung mit einer ausschließlich seitlichen Komponente.

Vorteilhafterweise bewegt sich das wegbewegbare Blasformteil bei Öffnen der Blasform in Umlaufrichtung des Blasformhalters nach vorne. Dadurch können Vorformlinge und fertiggeblasene Artikel von in Umlaufrichtung gesehen hinten in die Blasform ein- und ausgeführt werden.

Das im Vergleich zur Position des fertiggeblasenen Artikels feststehende Blasformteil wird unbeweglich an dem Blasformhalter gehalten. Dadurch ergibt sich eine besonders einfache Konstruktion.

Die beiden Blasformteile weisen Kontaktflächen auf, mit denen sie miteinander in Kontakt treten, um den Hohlraum der Blasform zu bilden. Diese Kontaktflächen können tangential in Bezug auf den Umlauf des Blasformhalters angeordnet sein. Dadurch weist eine Blasformhälfte mit ihrer Hohlraumhälfte unmittelbar nach außen, sodass ein Zugang hier leicht möglich ist.

Unter bestimmten Bedingungen können auch die Kontaktflächen im Vergleich zur Tangente unter einem Anstellwinkel ausgerichtet werden. Hierdurch kann sich bei der Konstruktion für die Übergabe der Vorformlinge und der fertiggeblasenen Artikel eventuell eine Erleichterung ergeben.

Weiterhin ist es vorteilhaft, eine Blasform vorzusehen, deren Blasformteile mehrere Abschnitte für mehrere Formblasartikel aufweisen. Damit ist eine Kapazitätserhöhung möglich. Dies ist insbesondere bei einer Blasform leicht möglich, bei der in einer radialen Richtung gesehen, mehrere Formblasartikel nebeneinander angeordnet sind, da diese dann leichter und schneller ausgeführt werden können.

Weiterhin sind Übergabesterne für die Übergabe der Vorformlinge und die Aufnahme der fertiggeblasenen Artikel vorgesehen. Diese Übergabesterne müssen so ausgebildet sein, dass sie eine Bewegung relativ zu der Blasform in tangentialer Richtung ermöglichen. So kann der Vorformling beispielsweise von hinten in die nach hinten geöffnete Blasform eingesetzt und der fertiggeblasene Artikel entsprechend herausgenommen werden.

Die Formblasmaschine ist bevorzugterweise zum Herstellen von Behältern wie Flaschen, insbesondere Kunststoffflaschen, vorzugsweise PET-Flaschen ausgebildet.

Ausführungsformen der Erfindung sollen anhand der beiliegenden Figuren erläutert werden. Dabei zeigt:
- Figur 1: eine schematische Draufsicht auf eine Formblasmaschine;
- Figur 2: eine schematische Draufsicht auf die Formblasmaschine in verschiedenen Verfahrenszuständen;
- Figur 3: eine schematische Draufsicht auf eine andere Formblasmaschine;
- Figur 4: eine schematische Ansicht von verschiedenen Blasformteilen.

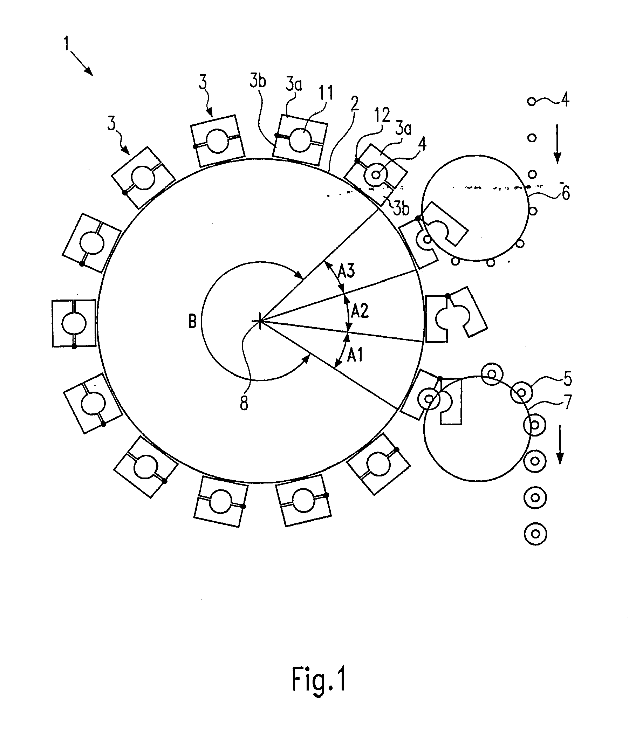

Figur 1 zeigt eine Formblasmaschine 1 in einer schematischen Draufsicht. An einem Rotor 2 sind Blasformen 3 angeordnet. Eine Blasform 3 umfasst unter anderem 2 Blasformhälften 3a und 3b. Die Blasformhälften 3a, 3b weisen Ausnehmungen auf, die bei geschlossener Blasform einen Hohlraum 11 bilden. Am unteren Ende der Blasformteile 3a, 3b kann ein drittes Teil vorgesehen sein, das den Boden des Hohlraums verschließt. Dieses Teil ist jedoch optional, da der Boden auch durch die Blasformhälften 3a, 3b gebildet sein kann. An dem Rotor 2 sind entlang des Rotorumfangs mehrere Blasformen 3 angeordnet. Der Rotor 2 in Figur 1 ist dazu vorgesehen, entgegen dem Uhrzeigersinn umzulaufen. Das Blasformteil 3b ist in einer festen Relation zu dem Rotor 2 am Rotor 2 angeordnet. Das Blasformteil 3a hingegen ist schwenkbar um eine Schwenkachse 12 vorgesehen. Durch das Verschwenken des Blasformteils 3a um die Schwenkachse 12 wird das Blasformteil 3a in einer seitlichen Bewegung wegbewegt. Beim Umlauf einer Blasform 3 am Rotor 2 durchläuft die Blasform verschiedene Zustände.

In dem mit B bezeichneten Winkelbereich ist die Blasform 3 geschlossen. In diesem Bereich wird ein Vorformling durch Formblasen in einen fertiggeblasenen Artikel umgewandelt.

Im Bereich A1 bis A3 ist die Blasform geöffnet. Im Bereich A3 wird in die Blasform 3 ein Vorformling 4 eingeführt. Im Bereich A1 wird ein fertiggeblasener Artikel 5 aus der Blasform 3 entnommen. Im Bereich A2 ist die Blasform 3 geöffnet und leer und wird vom Bereich A1 zum Bereich A3 bewegt.

Ein Übergabestern 6 ist dazu vorgesehen, einen Vorformling 4 in die Blasform 3 einzusetzen. Ebenso ist ein Übergabestern 7 vorgesehen, um fertiggeblasene Artikel 5 aus der geöffneten Blasform 3 zu entnehmen.

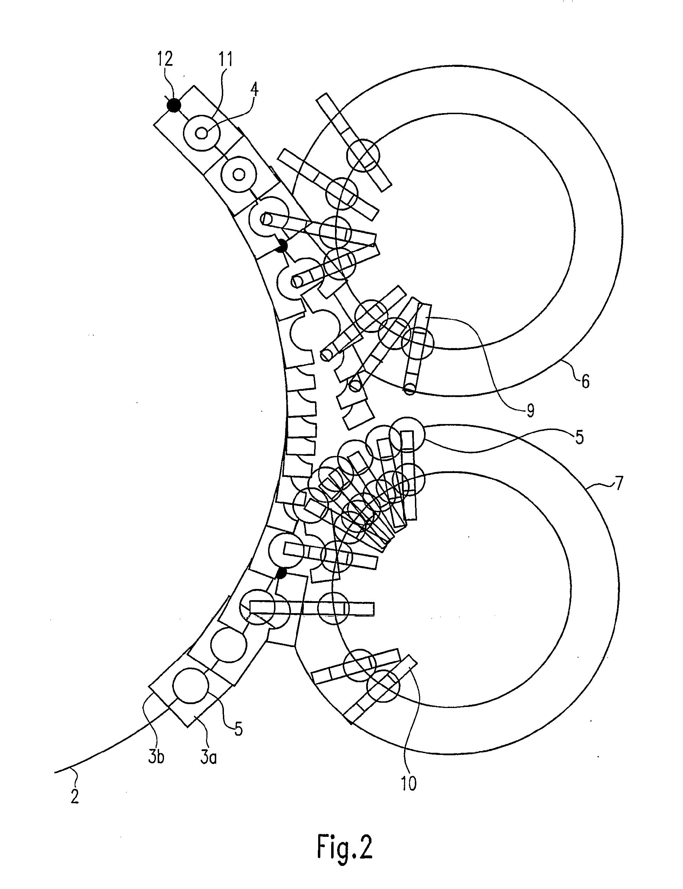

In Figur 2 ist eine Ausschnittsvergrößerung aus Figur 1 gezeigt. In Figur 2 sind verschiedene zustände einer Blasform 3 in verschiedenen Öffnungszuständen dargestellt. Die dargestellten zustände sind zeitlich nicht gleich beabstandet. Ganz unten in Figur 2 ist in der Blasform 3 ein fertiggeblasener Artikel 5 dargestellt und die Blasform 3 ist geschlossen. Die beiden Blasformteile 3a, 3b liegen aufeinander.

Im Bereich des Übergabesterns 7 wird das Blasformteil 3a nach rechts weggeschwenkt. Ein drehbarer und linear verschiebbarer Arm des Übergabesterns 7 greift den Artikel 5. Der Artikel 5 wird etwas radial aus der Blasformhälfte 3b herausbewegt und dann durch eine entsprechende Schwenkbewegung des Armes 10 so verzögert, dass bei weiterlaufender Blasform 3 der Artikel 5 nach hinten aus der Blasform 3 herausbewegt wird. Nachdem die Blasform 3 den Bereich des Übergabesterns 7 verlassen hat, kann der Artikel 5 von dem Übergabestern 7 weiter von dem Rotor 2 wegbewegt werden.

In die leere und sich in geöffneter Stellung befindliche Blasform 3 wird mit dem Übergabestern 6 über einen Arm 9 ein Vorformling 4 eingesetzt. Der Vorformling 4 wird hierbei von hinten in die sich vorbeibewegende Blasform 3 eingeführt. Dazu muss der Vorformling 4 eine Relativgeschwindigkeit in Bezug auf die Blasform 3 aufweisen, die eine tangentiale Komponente bezüglich der Bewegung des Rotors 2 beinhaltet, damit der von hinten einzuführende Vorformling 4 die Mitte der Blasform 3 erreicht. In dieser Position wird die Blasform 3 geschlossen. Der Vorformling kann dabei von der Blasform oder von einem anderen Halter des Rotors 2 gehalten werden.

Der Arm 9 ist drehbar und linear verschiebbar ausgebildet. Die Bewegung der Arme 9 und 10 werden mit entsprechenden Steuerkurven, die sowohl die Rotation als auch die Verschiebung vorgeben, gesteuert.

In Figur 2 ist eine Ausführungsform der Formblasmaschine 1 gezeigt, bei der die Kontaktfläche zwischen dem Blasformteil 3a und dem Blasformteil 3b tangential an den Rotorumfang angeordnet ist. Das bedeutet, dass die beiden seitlich des Hohlraums 11 sich berührenden Stellen der Blasformteile 3a und 3b auf der selben Linie umlaufen.

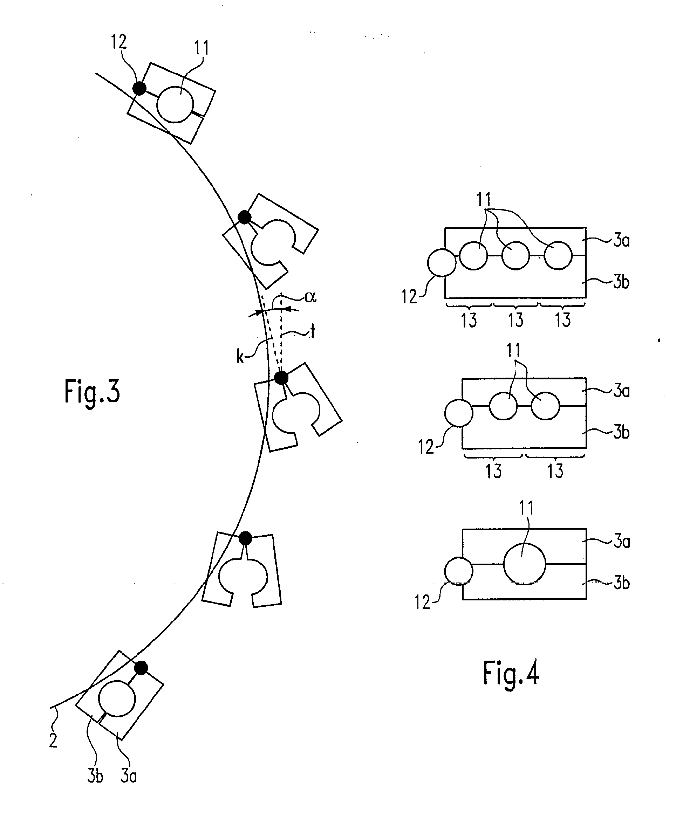

In Figur 3 ist eine andere Ausführungsform einer Formblasmaschine gezeigt, bei der die Kontaktflächen in einem Anstellwinkel a zur Tangentialen angeordnet sind. Das Blasformteil 3b ist im Vergleich zur Ausführungsform in Figuren 1 oder 2 um einige Grad um eine senkrechte Achse gedreht.

In Figur 3 ist schematisch von unten nach oben das Öffnen und Schließen der Blasform 3 gezeigt, bei dem Artikel entnommen und Vorformlinge eingesetzt werden können.

Eine tangentiale Richtung ist mit t bezeichnet und die Ausrichtung der Kontaktflächen mit k. zwischen den Linien t und k ist der Anstellwinkel a eingeschlossen.

In Figur 4 sind verschiedene Ausführungsformen für Blasformteile 3a, 3b gezeigt. In Figur 4 ganz unten ist diejenige Version gezeigt, wie sie auch in den Figuren 1 bis 3 dargestellt ist. Die Schwenkachse 12 ist in Figur 4 etwas unterhalb der Mitte der Blasform 3 vorgesehen. Sie kann auch bei oder oberhalb der Mitte liegen.

In Figur 4 unten ist nur ein Hohlraum 11 für einen fertiggeblasenen Artikel vorgesehen. Bei den beiden anderen in Figur 4 dargestellten Ausführungsformen sind zwei oder drei Hohlräume 11 vorgesehen, die jeweils in Abschnitten 13 angeordnet sind.

Mit solchen Blasformhälften 3a, 3b ist es möglich, gleichzeitig mehrere Artikel zu formen. Dadurch, dass die Hohlräume 11 in radialer Richtung des Rotors 2 gesehen nebeneinander angeordnet sind, können die Artikel 5 und die Vorformlinge 4 leicht nebeneinander und nacheinander oder gleichzeitig entnommen bzw. eingesetzt werden.

## Patentansprüche

1. Formblasmaschine (1) mit einem umlaufenden Blasformhalter (2), der als Rotor ausgebildet ist, und mit mindestens einer daran gehaltenen Blasform (3), die mindestens zwei gegenüberliegende Blasformteile (3a,_3b) umfasst, die Kontaktflächen aufweisen, mit denen sie miteinander in Kontakt treten, um den Hohlraum der Blasform zu bilden, wobei ein Blasformteil (3a, 3b) weiter innen umläuft als das andere Blasformteil (3a, 3b) und beim Öffnen der Blasform (3) mindestens eines der Blasformteile (3a, 3b) im Vergleich zur Position eines fertig geblasenen Artikels (5) feststeht und unbeweglich an dem als Rotor ausgebildeten Blasformhalter (2) gehalten ist und die Kontaktfläche des feststehenden Blasformteils (3a, 3b) in einem Anstellwinkel (α) zur Tangentialen in Bezug auf den Umlauf des Blasformhalters (2) angeordnet ist und wenigstens ein anderes Blasformteil (3a) in einer seitlichen Bewegung wegbewegt werden kann,
wobei das seitlich wegbewegbare Blasformteil (3a, 3b) schwenkbar an dem Blasformhalter (2) gehalten ist, und die Schwenkachse (12) senkrecht ist, und wobei ein Übergabestern (6) vorgesehen ist, der einen oder mehrere Vorformlinge (4) mit einem Arm (9)in eine Blasform (3) einsetzen kann, wobei diese mit einer Relativgeschwindigkeit zu der Blasform (3) in tangentialer Richtung des umlaufenden Rotors (2) in die Blasform (3) eingeführt werden können,
wobei ein Übergabestern (7) vorgesehen ist, der einen oder mehrere formgeblasene Artikel (5) mit einem drehbar und linear verschiebbaren Arm (10) aus einer Blasform (3) übernehmen kann, wobei diese mit einer Relativgeschwindigkeit zu der Blasform (3) in tangentialer Richtung des umlaufenden Blasformhalters (2) aus der Blasform (3) entnommen werden können,
wobei die Bewegung der Arme (9, 10) mit entsprechenden Steuerkurven, die sowohl die Rotation als auch eine Verschiebung vorgeben, gesteuert wird,
und wobei die Übergabesterne (6, 7) so ausgebildet sind, dass sie eine Bewegung relativ zu der Blasform (3) in tangentialer Richtung ermöglichen, und der Vorformling (4) von in Umlaufrichtung des Blasformhalters gesehen hinten in die in Umlaufrichtung des Blasformhalters gesehen nach hinten geöffnete Blasform (3) eingesetzt und der fertig geblasene Artikel entsprechend herausgenommen werden kann.

2. Formblasmaschine nach Anspruch 1, **dadurch gekennzeichnet, dass** das seitlich wegbewegbare Blasformteil (3a, 3b) in Umlaufrichtung des Blasformhalters nach vorne bewegt werden kann.

3. Formblasmaschine nach einem der Ansprüche 1 bis 2, **dadurch gekennzeichnet, dass** die Blasformteile (3a, 3b) Abschnitte (13) für mehrere Formblasartikel (5) aufweisen.

## Claims

1. A blow moulding machine (1) with a circulating blow mould holder (2) which is designed in the form of a rotor, and with at least one blow mould (3) which is held thereon and which comprises at least two opposed blow mould parts (3a, 3b) which have contact faces with which they come into contact with each other in order to form the cavity of the blow mould, wherein one blow mould part (3a, 3b) circulates further on the inside than the other blow mould part (3a, 3b), and when the blow mould (3) is opened at least one of the blow mould parts (3a, 3b) is stationary as compared with the position of a finished blow moulded article (5) and is held immovably on the blow mould holder (2) designed in the form of a rotor, and the contact face of the stationary blow mould part (3a, 3b) is arranged at an angle of attack (α) to the tangential with respect to the orbit of the blow mould holder (2), and at least one other blow mould part (3a) can be moved away in a lateral movement, wherein the blow mould part (3a, 3b) capable of being moved away laterally is held in a pivotable manner on the blow mould holder (2), and the pivot axis (12) is at a right angle, and wherein a transfer star wheel (6) is provided which can insert one or more pre-forms (4) by one arm (9) into a blow mould (3), wherein the aforesaid pre-forms (4) can be introduced into the blow mould (3) in a tangential direction of the circulating rotor (2) at a relative speed to the blow mould (3), wherein a transfer star wheel (7) is provided which can take over one or more blow moulded articles (5) from a blow mould (3) by an arm (10) displaceable in a rotatable and linear manner, wherein the aforesaid blow moulded articles (5) can be removed from the blow mould (3) in a tangential direction of the circulating mould holder (2) at a relative speed with respect to the blow mould (3), wherein the movement of the arms (9, 10) is controlled with suitable control cams which pre-set both the rotation and a displacement, and wherein the transfer star wheels (6, 7) are designed in such a way that they permit a movement relative to the blow mould (3) in a tangential direction, and the pre-form (4) is inserted from the rear - as viewed in the circulating direction of the blow mould holder - into the blow mould (3) opened towards the rear - as viewed in the circulating direction of the blow mould holder - and the finished blow moulded article can be removed accordingly.

2. A blow moulding machine according to claim 1, **characterized in that** the blow mould part (3a, 3b) capable of being moved away laterally can be moved forwards in the circulating direction of the blow mould holder.

3. A blow moulding machine according to one of claims 1 to 2, **characterized in that** the blow mould parts (3a, 3b) have portions (13) for a plurality of blow mould articles (5).

## Revendications

1. Machine à mouler par soufflage (1) avec un support de moule de soufflage (2) périphérique réalisé sous forme de rotor et avec au moins un moule de soufflage (3) maintenu sur celui-ci et comprenant au moins deux pièces de moule de soufflage (3a, 3b) opposées, lesquelles présentent des surfaces de contact par lesquelles elles entrent en contact l'une avec l'autre pour former la cavité du moule de soufflage, une pièce de moule de soufflage (3a, 3b) tournant en étant plus proche de l'intérieur que l'autre pièce de moule de soufflage (3a, 3b), au moins une des pièces de moule de soufflage (3a, 3b) étant fixe par rapport à la position d'un article (5) moulé par soufflage fini lors de l'ouverture du moule de soufflage (3) et étant maintenue immobile sur le support de moule de soufflage (2) réalisé comme rotor et la surface de contact de la pièce de moule de soufflage fixe (3a, 3b) étant disposée suivant un angle d'incidence (α) par rapport à la tangente à la périphérie du support de moule de soufflage (2) et au moins une autre pièce de moule de soufflage (3a) pouvant être éloignée par déplacement latéral, la pièce de moule de soufflage (3a, 3b) éloignable latéralement étant maintenue de manière à pouvoir pivoter sur le support de moule de soufflage (2), l'axe de pivotement (12) étant vertical, une étoile de transfert (6) étant prévue, laquelle peut mettre en place au moyen d'un bras (9) une ou plusieurs préformes (4) dans un moule de soufflage (3), celles-ci pouvant être introduites dans le moule de soufflage (3) avec une vitesse relative par rapport au moule de soufflage (3) dans la direction tangentielle du support de moule de soufflage (2) périphérique, une étoile de transfert (7) étant prévue, laquelle peut recevoir d'un moule de soufflage (3) un ou plusieurs articles (5) moulés par soufflage au moyen d'un bras (10) rotatif et déplaçable linéairement, ceux-ci pouvant être prélevés du moule de soufflage (3) avec une vitesse relative par rapport au moule de soufflage (3) dans la direction tangentielle du support de moule de soufflage (2) périphérique, le déplacement des bras (9, 10) étant commandé par des cames de commande correspondantes prescrivant la rotation ainsi qu'une translation, les étoiles de transfert (6, 7) étant réalisées de manière à permettre un déplacement relatif par rapport au moule de soufflage (3) dans la direction tangentielle, la préforme (4) pouvant être mise en place par l'arrière, vu dans la direction périphérique du support de moule de soufflage, dans le moule de soufflage (3) ouvert vers l'arrière, vu dans la direction périphérique du support de moule de soufflage, et l'article moulé par soufflage fini pouvant être retiré en conséquence.

2. Machine à mouler par soufflage selon la revendication 1, **caractérisée en ce que** la pièce de moule de soufflage (3a, 3b) éloignable latéralement peut être déplacée vers l'avant dans la direction périphérique du support de moule de soufflage.

3. Machine à mouler par soufflage selon la revendication 1 ou 2, **caractérisée en ce que** les pièces de moule de soufflage (3a, 3b) présentent des segments (13) pour plusieurs articles moulés par soufflage (5).
